# EUROPEAN PATENT APPLICATION

(11) **EP 0 933 412 A1**
(43) Date of publication of application: **04.08.1999**
(21) Application number: 99100354.2
(22) Date of filing: 14.01.1999
(51) Int. Cl.: C09J 151/00, C08F 218/08, C09J 175/06

(54) **Water-resistant adhesive based on a vinyl acetate emulsion polymer containing a nonionic polyurethane**

(30) Priority: 30.01.1998 US 16378
(71) Applicant: National Starch and Chemical Investment Holding Corporation, Wilmington, Delaware 19803-7663 (US)
(72) Inventor: Farwaha, Rajeev, Brampton, Ontario L6T 1M1 (CA); Northover, James A., Mississauga, Ontario L5J 1H6 (CA); Liverance, Patricia A.M., Fergus, Ontario N1M 3L3 (CA); Yearwood, Godric S., Scarborough, Ontario M1K 2N6 (CA)
(74) Representative: Held, Stephan, Dr.rer.nat., Dipl.-Chem.

(57) **Abstract**

The present invention relates to an aqueous emulsion polymer which is useful as a woodworking adhesive. The polymer is prepared by reacting vinyl acetate with an N-methylol containing copolymerizable monomer in the presence of polyvinyl alcohol wherein at least 85% of the polyvinyl alcohol is hydrolyzed and a water-dispersible nonionic polyurethane. The polyurethane is prepared by reacting (i) an organic polyisocyanate, (ii) water-soluble polyalkylene glycols containing at least 70 weight percent of ethylene glycol units, and (iii) polyhydric branched alcohols containing at least three hydroxyl groups per molecule.

## Description

The present invention relates to an aqueous emulsion polymer which is useful as an adhesive. In particular, the present invention relates to a polymer prepared by reacting vinyl acetate with an N-methylol containing copolymerizable monomer in the presence of polyvinyl alcohol and a water-dispersible nonionic polyurethane.

Adhesive compositions prepared from urea-formaldehyde resins and modified urea-formaldehyde resins have been shown to provide good bond strength between wood substrates and to exhibit water-resistance. However, such adhesives are unpopular because formaldehyde is released during the bonding operation of the wood substrates and articles prepared from such wood substrates also tend to release formaldehyde which causes health and environmental concerns.

In order to overcome the deleterious effect of formaldehyde, various methods have been attempted including, for example, a method in which the proportion of melamine to formaldehyde in the modified urea-formaldehyde resin was increased, and a method in which a substance capable of catching formaldehyde was added at the time of bonding. However, insofar as formaldehyde was used as a significant component in the preparation of the adhesive, it has been impossible to overcome thoroughly the defects.

For these reasons, aqueous emulsions of vinyl acetate polymers and copolymers have replaced urea-formaldehyde resins and modified urea-formaldehyde resins in formulating wood adhesives. While such emulsions have been shown to provide bond strength, fast setting, colorless glue lines and ease of application, they are poor with respect to water-resistance. The bonds obtained upon drying of these emulsions, while excellent in their dry state, tend to lose a large portion, for instance as much as about 80 percent or more, of their strength upon being wetted with water. In order to improve water resistance of these adhesives they are generally formulated with other resins such as resorcinol-formaldehyde, urea-formaldehyde, melamine-formaldehyde, phenol-formaldehyde resins and trimethylol phenol oligomer or with fusion aids, such as tetrahydrofurturyl alcohol or ethylene glycol diacetate. These adhesive systems are described, for example in U.S. Patent Nos. 3,301,809; 3,563,851; 3,433,701; 3,041,301; 4,474,915; and 4,687,809.

Three recent patents which describe the use of aqueous emulsions of vinyl acetate polymers and copolymers as woodworking adhesives are U.S. Patent Nos. 5,434,216 5,391,608 and 5,439,960. U.S. Patent No. 5,434,216 describes a woodworking adhesive containing a polyvinyl alcohol stabilized vinyl acetate/N-methylol acrylamide containing emulsion polymer. The polymer is polymerized in a protective colloidal system which contains 1.5 to 2.5% by weight of 88% hydrolyzed polyvinyl alcohol and 1 to 4% by weight of 95 to 99.5% hydrolyzed polyvinyl alcohol.

U.S. Patent Nos. 5,391,608 and 5,439,960 describes a woodworking adhesive composition prepared by a two stage emulsion polymerization procedure. In the first stage, vinyl acetate is polymerized with a post crosslinking monomer such as N-methylol acrylamide in the presence of vinyl alcohol to produce a copolymer. A second nonomeric system containing methyl methacrylate monomer is added to the copolymer and polymerized.

The above described formulated and nonformulated vinyl acetate polymer and copolymer/polyvinyl alcohol aqueous emulsion based adhesives may provide adequate water resistance for wood substrates tested at room temperature and under vacuum-pressure soaks, however, none of the current vinyl acetate polymer and copolymer based adhesives meet CSA (Canadian Standards Association) 0112.8-M1977 Type II cold soak test standards for non-structural glued wood products such as exterior moldings, window and door stock and glued wood panels where the product is submerged in water at 21 to 24°C for 48 hours and without drying tested for failure.

Accordingly it is an object of the invention to provide an adhesive which exhibits improved bonding properties and water resistance.

It is also an object of the invention to provide an adhesive which is effective for bonding cellulosic materials such as non-structural glued wood products.

It is another object of the invention to provide an adhesive which has increased resistance to freezing and thawing.

It is a further object of the invention to provide an adhesive which passes CSA 0112.8-M1977 Type II cold soak test standards for non-structural glued wood products where the product is submerged in water at 21 to 24°C for 48 hours.

With regard to the foregoing and other objects, the invention provides a water-resistant adhesive composition comprising an aqueous emulsion polymer. The aqueous emulsion polymer is prepared by reacting
(A) from about 80 to 99 weight percent, based on the total weight of monomer, of vinyl acetate; and
(B) from about 1 to about 10 weight percent, based on the total weight of monomer, of an N-methylol containing copolymerizable monomer, wherein the polymerization is conducted in the presence of
(C) at least 2 weight percent, based on the total weight of the aqueous emulsion, of polyvinyl alcohol wherein at least 85% of the polyvinyl alcohol is hydrolyzed; and
(D) from about 0.1 to about 8.0 parts per hundred monomer (pphm) in the emulsion of a water-dispersible nonionic polyurethane which is prepared by reacting (i) an organic polyisocyanate, (ii) water-soluble polyalkylene glycols containing at least 70 weight percent of ethylene glycol units and having an average molecular weight of from about 500 to about 100,000, and (iii) polyhydric branched alcohols containing at least three hydroxyl groups per molecule, wherein the equivalent ratio of (ii) to (iii) is in the range of 1:0.01 to 1:10.

According to another aspect of the invention, the aqueous emulsion polymer is prepared by reacting vinyl acetate and the N-methylol containing copolymerizable monomer with an ethylenically unsaturated monomer (B') in an amount of from about 0.1 to about 10 weight percent, based on the total weight of monomer. The ethylenically unsaturated monomer is selected from the group consisting of vinyl esters, ethylene, alkyl esters of acrylic and methacrylic acid, substituted or unsubstituted mono and dialkyl esters of alpha, beta-unsaturated dicarboxylic acids, and alpha, beta-unsaturated carboxylic acids, provided that the ethylenically unsaturated monomer is not methylmethacrylate.

An additional aspect of the invention comprises a method of making a water-resistant adhesive for placement between layers of cellulosic material, said method comprising (I) mixing an acidic metal salt curing agent with the aqueous emulsion polymer to form an adhesive; (II) applying the adhesive to a cellulosic material; and (III) allowing the adhesive to air cure or using radio frequency to cure the adhesive.

The adhesive compositions of the invention can be used in many different applications but are especially useful as woodworking adhesives due to their improved water resistance and bond strength as compared to known adhesives. The adhesives of the invention pass CSA 0112.8-M1977 Type II cold soak test standards for non-structural glued wood products where the product is submerged in water at 21 to 24°C for 48 hours and without drying tested for failure. Notably, the adhesives of the invention hold the wood together without swelling.

This invention provides an improved water-resistant adhesive. The water-resistant adhesive comprises an aqueous emulsion polymer which is prepared by reacting
(A) from about 80 to 99 weight percent, based on the total weight of monomer, of vinyl acetate;
(B) from about 1 to about 10 weight percent, based on the total weight of monomer, of an N-methylol containing copolymerizable monomer; and (B') from 0 to about 10 weight percent, based on the total weight of monomer, of an ethylenically unsaturated monomer selected from vinyl esters, ethylene, alkyl esters of acrylic and methacrylic acid, substituted or unsubstituted mono and dialkyl esters of alpha, beta-unsaturated dicarboxylic acids, and alpha, beta-unsaturated carboxylic acids. The polymerization is conducted in the presence of
(C) at least 2 weight percent, based on the total weight of the aqueous emulsion, of polyvinyl alcohol wherein at least 85% of the polyvinyl alcohol is hydrolyzed, and
(D) from about 0.1 to about 8.0 parts per hundred monomer (pphm) in the emulsion of a water-dispersible nonionic polyurethane.

Component (A) of the aqueous emulsion is vinyl acetate which has the formula CH₃CO₂CH=CH₂. The vinyl acetate is present in the emulsion in an amount of from about 80 to about 99 weight percent, preferably from about 90 to about 95 weight percent, based on the total weight of monomers in the emulsion.

Component (B) of the aqueous emulsion is an N-methylol containing copolymerizable monomer which is capable of copolymerizing with vinyl acetate. Suitable N-methylol containing copolymerizable monomers include N-methylol acrylamide, Methanol acrylamide, N-propanol acrylamide, N-methylol meth-acrylamide, N-ethanol methacrylamide, N-propanol acrylamide, N-methylol maleamic acid, N-methylol maleamic acid esters, N-methylol-p-vinyl-benzamide, N-(alkoxymethyl) acrylates and methacrylates, N-(methoxymethyl) acrylamide, N-(butoxymethyl) acrylamide, N-(methoxymethyl) meth-acrylamide, N-(butoxymethyl) allyl carbamate and N-(methoxymethyl) meth-acrylamide, N-(butoxymethyl) allyl carbamate and N-(methoxymethyl) allyl carbamate. Other mono-olefinically unsaturated compounds containing a N-methylol group and capable of copolymerizing with vinyl acetate may be used.

Preferably, the N-methylol containing copolymerizable monomer has the formula 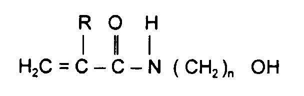 wherein R is hydrogen or an alkyl group having 1 to 8 carbon atoms and n is a number from 1 to 8. More preferably, the N-methylol containing copolymerizable monomer is N-methylol acrylamide. N-methylol acrylamide is commercially available in the form of an aqueous solution from Proctor Chemical. Combinations of N-methylol containing copolymerizable monomers may be used in the emulsions. In addition, mixtures of the N-methylol containing copolymerizable monomers with allyl carbamate, acrylamide or methacrylamide may also be used in the emulsions.

The N-methylol containing copolymerizable monomer is present in the aqueous emulsion in an amount of from about 1 to about 10 weight percent, preferably from about 3 to about 6 weight percent, based on the total weight of monomer in the emulsion.

Optionally, component (B') which is an ethylenically unsaturated monomer is included in the aqueous emulsion. The ethylenically unsaturated monomer is selected from vinyl esters which exclude the N-methylol containing copolymerizable monomers of component (B), ethylene, alkyl esters of acrylic and methacrylic acid, substituted or unsubstituted mono and dialkyl esters of alpha, beta-unsaturated dicarboxylic acids, and alpha, beta-unsaturated carboxylic acids. Suitable vinyl esters include vinyl esters of carboxylic acids such as the vinyl ester of neo-nonanoic, neo-decanoic, neo-pentanoic and 2-ethylhexanoic acids. Such vinyl esters are commercially available under the trademarks LICAN from Huls, VEOVA from Shell Chemical, and VYNATE from Union Carbide Plastics and Chemical Company Inc.

Additional vinyl esters are vinyl formate, vinyl propionate, vinyl butyrate, vinyl isobutyrate, vinyl valerate, vinyl 2-ethyl-hexanoate, vinyl isooctanoate, vinyl nonoate, vinyl decanoate, vinyl pivalate, vinyl versatate, etc. Suitable alkyl esters of acrylic and methacrylic acid include methyl acrylate, ethyl acrylate, ethyl methacrylate, butyl acrylate, etc. Suitable substituted or unsubstituted mono and dialkyl esters of alpha, beta-unsaturated dicarboxylic acids include substituted and unsubstituted mono and dibutyl, mono and diethyl maleate esters as well as the corresponding fumarates. Suitable alpha, beta-unsaturated carboxylic acids include crotonic acid, acrylic acid, metacrylic acid, fumaric acid, maleic acid, itaconic acid, citraconic acid, etc. The prefered ethylenically unsaturated monomer is butyl acrylate.

The choice of ethylenically unsaturated monomer depends on the desired performance p operties of the polymer product and the compatibility of the ethylenically unsaturated monomer with vinyl acetate in the emulsion. Ethylenically unsaturated monomers having a copolymerization reactivity ratio that is much different than that of vinyl acetate are not suitable. For example, methylmethacrylate and styrene are not suitable ethylenically unsaturated monomers for use in the adhesive compositions of the present invention.

When the ethylenically unsaturated monomer is present in the emulsion, the ethylenically unsaturated monomer is present in an amount of from about 0.1 to about 10 weight percent, preferably from about 3 to about 6 weight percent, based on the total weight of monomers in the emulsion. The inventors have determined that greater than 10 weight percent of the ethylenically unsaturated monomer in the emulsion results in an adhesive that displays the undesirable characteristic of blocking and a decrease in shear values.

The emulsion polymerization is carried out in the presence of at least 2 weight percent, based on the total weight of the aqueous emulsion, of polyvinyl alcohol, component (C), wherein at least 85%, preferably 88%, of the polyvinyl alcohol is hydrolyzed. The molecular weight of the polyvinyl alcohol has not been found to be critical to the invention and low, medium, or high viscosity grades may be added depending upon the desired viscosity of the polymer. The polyvinyl alcohol may be added, in its entirety, to an initial charge which is added to the emulsion polymerization reactor or a portion of the polyvinyl alcohol, for example, from about 25 to about 90 weight percent thereof, can be added continuously or intermittently during the emulsion polymerization. Polyvinyl alcohols are commercially available under the trademarks COVOL, ELVANOL, GELVATOL, GOHSENOL, DENKA POVAL, WACKER, and VINOL from their respective companies.

In addition to the polyvinyl alcohol, the emulsion polymerization is carried out in the presence of a water-dispersible or water-soluble nonionic polyurethane, component (D). The water-dispersible nonionic polyurethane is prepared by reacting (i) an organic polyisocyanate, (ii) water-soluble polyalkylene glycols containing at least 70 weight percent of ethylene glycol units, and (iii) polyhydric branched alcohols containing at least three hydroxyl groups per molecule. The equivalent ratio of (ii) to (iii) is in the range of 1:0.01 to 1:10.

The term "nonionic" means that the polyurethane contains no ionic groups as emulsifying groups, i.e., no carboxylate, sulfonate, phosphonate or ammonium groups. The dispersibility of the polyurethane is due to the presence of the water-soluble polyalkylene glycols, which contain at least 70 weight percent of ethylene glycol units, relative to polyalkylene glycols, and preferably at least 80 weight percent of ethylene glycol units.

Ethylene glycol units correspond to the formula -[CH2-CH2-0]n, wherein n indicates the degree of oligomerization.

The suitable water-soluble polyalkylene glycols are polyethylene glycols that are prepared by the polyaddition of ethylene oxide to water or to ethylene glycol as the starting molecule, but also polyaddition products of ethylene oxide to other low molecular weight diols, such as butanediol, hexanediol, or 4,4'-dihydroxy-diphenylpropane. A plurality of water-soluble polyethylene glycols having different average molecular weights may also be used. Copolymers of ethylene oxide and propylene oxide may also be used provided that the content of ethylene glycol units is at least 70 weight percent relative to the copolymer. Preferably, the water-soluble polyethylene glycols have an average molecular weight of 500 to 1000,000 and most preferably 1,000 to 20,000.

The branched alcohols containing at least three hydroxyl groups per molecule are preferably selected from trimethylolpropane, pentaerythritol, glycerol, ditrimethylolpropane, dipentaerythritol, and alkoxylates thereof. The suitable alkoxylates include, for example, trimethylolpropane containing 5 to 10 moles of propylene oxide. Preferably, the branched alcohol is trimethylolpropane.

The equivalent ratio of the water-soluble polyalkylene glycols, component (ii), to the branched alcohols containing at least three hydroxyl groups, component (iii) affects the viscosity of the polymer product. The higher the percentage of branched alcohol containing at least three hydroxyl groups in relation to the water-soluble polyalkylene glycol, the higher the viscosity of the polymer product. The equivalent ratio of water-soluble polyalkylene glycols to the branched alcohols containing at least three hydroxyl groups is preferably in the range of 0.1 to 5, more preferably, 0.1 to 3.

The polyisocyanates are diisocyanates and the products obtained by the trimerization of some of the isocyanate groups. Suitable diisocyanates include 1,5-naphthalene diisocyanate, 4,4'-diphenylmethane diisocyanate (MDI), hydrogenated MDI (H12 MDI) xylylene diisocyanate, diisocyanate (XDI), tetramethylxylylene diisocyanate (TMXDI), 4,4'-diphenyldimethyl-methane diisocyanate, di- and tetraalkyldiphenyl-methane diisocyanates, 4,4'-dibenzyl diisocyanate, 1,3-phenylene diisocyanate, 1,4-phenyl diisocyanate, the isomers of toluylene diisocyanate (TDI), 1-methyl-2, 4-diisocyanatocyclohexane, 1,6-diisocyanato-2,2,4-trimethylhexane, 1-isocyanatomethyl-3-isocyanato1,5,5-trimethyl-cyclohexane (IPDI), chlorinated and brominated diisocyanates, phosphorus-containing diisocyanates, 4,4'-diisocyanatophenyl-perfluoroethane, tetramethoxybutane-1, 4-diisocyanate, butane-1,4-diiso-cyanate, hexane-1,6-diisocyanate (HDI), dicyclohexylmethane diisocyanate, cyclohexane-1 ,4-diisocyanate, ethylene diisocyanate, phthalic acid-bis-iso-cyanatoethyl ester, diisocyanates containing reactive halogen atoms, such as 1-chloromethylphenyl-2,4-diisocyanate, 1-bromomethylphenyl-2,6-diiso-cyanate, and 3,3-bis-chloromethyl ether 4,4'-diphenyl diisocyanate, trimethylhexamethylene diisocyanate, 1 ,4-diisocyanatobutane, 1,12-diisocyanato-dodecane, dimeric fatty acid diisocyanate.

Preferred polyisocyanates are tetramethylene diisocyanate, hexamethylene diisocyanate, undecane diisocyanate, dodecanemethylene diisocyanate, 2,2,4-trimethylhexane diisocyanate, 1,3- and 1,4-cyclohexane diisocyanate, 1,3- and 1,4-tetramethylxylene diisocyanate, isophorone diisocyanate, 4,4-dicyclohexylmethane diisocyanate, and lysine ester diisocyanates. Most preferably the polyisocyanate is tetramethylxylene diisocyanate which is available from Cyanamide.

The equivalent ratio of OH to NCO groups, wherein "OH" is defined as the sum of the polyalkylene glycols and branched alcohols containing at least three hydroxyl groups, i.e., (ii) + (iii), may vary within broad ranges. Preferably, the equivalent ratio of OH:NCO is 1:0.99 to 1:0.5, most preferably 1:0.85 to 1:0.6.

The water-dispersible nonionic polyurethane is prepared either in a one-step process or in a two-step process. In a two-step process, a prepolymer is prepared by prereacting part of the water-soluble polyalkylene glycols with the polyisocyanate, then adding the polyhydric branched alcohols. The polyurethanes range from wax-like to solid at room temperature and are miscible with water.

Preferably, the water-dispersible nonionic polyurethane is prepared by mixing the polyisocyanates, polyalkylene glycols, and polyhydric branched alcohols in the presence of an organic solvent at a water content of less than 0.5 weight percent. The mixture is healed at 70 to 200°C, preferably 80 to 170°C for 1 to 30 hours. The reaction time can be reduced by the presence of catalysts which preferably is selected from triethylamine, dimethylbenzylamine, bis-dimethylaminoethyl ether, bis-methylaminomethyl phenol, 1-methylimidazole, 2-methyl-1-vinylimidazole, 1-allylimidazole, 1-phenylimidazole, 4-dimethyl-aminopyridine, 4-pyrrolidinopyridine, 4-morpholinopyridine, and 4-methylpyridine. However, the process is preferably carried out without a catalyst. The organic solvent is preferably omitted in the process for preparing the water-dispersible nonionic polyurethanes.

The water-dispersible nonionic polyurethane is present in the emulsion in an amount of from about 0.1 to about 8.0 pphm, preferably from about 1 to about 5 pphm, and most preferably from about 2 to about 4 pphm. The water-dispersible nonionic polyurethanes are commercially available as 40% aqueous solutions under the trademark DISPONIL PC 14-17 EXP from Henkel KGaA Coatings & Polymers.

While not wishing to be bound by any theory or mechanism, the inventors believe that the polyvinyl alcohol and the polyurethane in the aqueous emulsion of the invention stabilizes the polymer dispersion during and after polymerization of the monomers. The stabilization results from the adsorption of the polyvinyl alcohol and polyurethane on the surface of the polymer particles which leads to steric hinderance and prevents the polymer particles from coagulating.

The emulsion polymerization is carried out using conventional emulsion polymerization procedures at a pH of between 2 and 7, preferably at a pH of between 3 and 5. In order to maintain the pH range, it may be useful to work in the presence of customary buffer systems, for example, in the presence of alkali metal acetates, alkali metal carbonates, alkali metal phosphates. Polymerization regulators, like mercaptans, aldehydes, chloroform, ethylene chloride and trichloroethylene, can also be added in some cases. Conventional batch, semi-batch or continuous emulsion polymerization procedures may be utilized.

Although the solids content and viscosity of the emulsion can vary typical total solids content which is defined as the nonvolatile components of the emulsion is in the range of from about 40 to about 65 weight percent, based on the total weight of the emulsion.

The emulsion polymerization reaction is generally continued until the residual vinyl acetate monomer content is below about 1%. The completed reaction product is then allowed to cool to about room temperature in a finishing vessel.

The adhesive compositions of the invention may be formulated with such additives as are commonly used in the production of adhesives. Such additives include formaldehyde resins such as resorcinol formaldehyde, urea formaldehyde, melamine formaldehyde, and phenol formaldehyde. Additionally, A- or B- stage phenolic resins, such as trimethylol phenol oligomer which is prepared by any conventional phenolaldehyde condensation reaction, may be added. Such additives may be added in an amount of from about 1 to about 20 weight percent, preferably 3 to 10 weight percent, based on the total weight of the emulsion. The adhesives may also be formulated with from about 1 to about 7 weight percent, based on the total nonvolatile weight of the emulsion, of a fusion aid such as tetrahydrofurfuryl alcohol, ethylene glycol diacetate, and ethylene glycol monoethyl ether acetate as taught in U.S. Patent No. 4,474,915, the disclosure of which is incorporated by reference.

The addition of an acidic, metal salt curing agent may also be desired in order to accelerate the cure of the formulated adhesive. The preferred curing agents for use herein include acidic, metal salts selected from chromic nitrate, chromic perchlorate, aluminum nitrate, aluminum chloride, and para-toluene sulfonic acid. It is noted that the inventors determined that zinc nitrate which is a commonly used acidic, metal salt curing agent in adhesives does not allow the adhesive composition of the present invention to meet CSA 0112.8-M1977 Type II cold soak test standards for non-structural glued wood products where the product is submerged in water at 21 to 24°C for 48 hours and without drying tested for failure.

The proportion of acidic, metal salt curing agent which is added will depend on the rate of cure which is desired in the final product but a practical range has been found to be from about 0.003 to about 0.12 gram equivalents of curing agent (anhydrous basis) for each 100 grams of the polymer. Preferably, the acidic, metal salt curing agent is aluminum chloride.

If fusion aids are used in the adhesive composition, it may also be desirable to add crosslinking inhibitors to improve the storage stability of the adhesives. Crosslinking inhibitors are described in U.S. Patent No. 4,085,074, the disclosure of which is incorporated by reference. Typical inhibitors include ammonia, alkyl amines such as triethyl amine, and alkylol amines such as triethanol amine and N-methylethanol amine. When used, such inhibitors are generally added in an amount such that the mole ratio of the inhibitor to curing agent ranges from about 0.1 to about 1.7.

The adhesive compositions of the present invention may additionally contain other additives which include pigments such as titanium oxide, extenders such as flour, i.e., walnut shell flour, dispersing agents, defoaming agents, anti-freezing agents, preservatives, surfactants, sequestering agents, coalescing agents, defoaming agents, humectants, thickeners, defoamers, colorants, waxes, bactericides, fungicides, and fillers such as cellulose or glass fibers, clay, kaolin, talc, calcium carbonate and wood meal, and odor-modifying agents.

In preparing the adhesive compositions of this invention, the aqueous polymer is mixed with the additive(s). The additive (s) may be added during the polymerization, after the polymerization and prior to the addition of the curing agent, or with the addition of the curing agent.

The adhesive compositions may be applied to a wide variety of materials such as, for example, wood, cement, concrete, nonwoven or woven fabrics, aluminum or other metals, glass, ceramics, glazed or unglazed, tiles, polyvinyl chloride and polyethylene terephthalate and other plastics, plaster, stucco, roofing substrates such as asphaltic coatings, roofing felts, synthetic polymer membranes, and foamed polyurethane insulation. In addition, the adhesive compositions may be applied to previously painted, primed, undercoated, worn, or weathered substrates.

The adhesive compositions may be applied by techniques well known in the art such as by brush, roller, air-assisted spray, airless spray, direct roll coater, curtain coater, bar coater, and the like.

The following nonlimiting examples illustrate further aspects of the invention.

### EXAMPLE I

A vinyl acetate homopolymer resin was prepared which had the following formula:

| | INGREDIENTS | GRAMS | CONCENTRATION (pphm) |
|---|---|---|---|
| Initial Charge | Water | 382.03 | 53.45 |
| | 88% Hydrolyzed PVOH Blend | 22.16 | 3.10 |
| | Defoamer | 2.57 | 0.36 |
| | | | |
| Monomer Mix | Water | 215.21 | 30.11 |
| | 88% hydrolyzed PVOH | 0.71 | 0.10 |
| | N-methylol Acrylamide (48% solids) | 44.76 | 6.26 (3.00 pphm of 100% active) |
| | Vinyl Acetate Monomer | 714.73 | 100.00 |
| | | | |
| Catalyst Solution | Water | 17.80 | 2.49 |
| | 28% NH₄OH | 0.71 | 0.10 |
| | Ammonium Persulphate | 0.93 | 0.13 |
| | | | |
| TOTAL | | 1401.61 | |

In a 2-litre vessel, equipped with a reflux condenser, addition funnels, and a variable stirrer, the Initial Charge was added to the reactor, with an agitation at 260 rpm. The Initial Charge in the reactor was heated to 73°C. When the temperature of the Initial Charge reached 55 to 60°C, 50% of Catalyst Solution and 8% of Monomer Mix were combined with the Initial Charge to form a mixture. When the temperature of the mixture reached 73°C, the remaining Monomer Mix was added to the reactor at a rate such that the temperature of the mixture in the reactor was maintained at 73°C. At the end of the Monomer Mix, the remaining 50% of Catalyst Solution was added and the temperature was increased to 85 to 90°C. The temperature was maintained for 30 minutes.

Agitation was continued and the mixture was cooled and a solution of 2.0 grams of tertiary butyl hydro-peroxide in 25.0 grams of water and 1.4 grams of sodium formaldehyde sulphoxylate was added. The resulting emulsion polymer, Polymer I, was determined to have negligible coagulum, 49 to 51% solids, pH of 4.0 to 5.0 and a viscosity of 4500 to 6000 cps. The test results for the cold soak test are summarized in Table I.

### EXAMPLE II

A vinyl acetate - butyl acrylate copolymer latex was prepared using a blend of 88% and 98% hydrolyzed polyvinyl alcohols, and a non-ionic surfactant, Rexol 25/10 (available from Huntsman). The formula and procedure were as follows:

| | Ingredients | Grams/Conc. (pphm) |
|---|---|---|
| Initial Charge | Water | 596.42/ 83.45 |
| | 88% & 98% Hydrolyzed PVOH Blend | 25.74/3.60 |
| | Defoamer | 2.55/ 0.36 |
| | Rexol 25/10 | 3.58/ 0.50 |
| Monomer Mix | Vinyl Acetate Monomer | 678.99/ 95.00 |
| | Butyl Acrylate | 35.74/ 5.00 |
| | N-Methylol Acrylamide (48% solids) | 44.76/ 6.26 |
| | (3.00 pphm of 100% Active) | |
| Catalyst Solution | Water | 11.86/ 1.66 |
| | 28% NH₄OH | 0.53/ 0.07 |
| | Ammonium Persulphate | 1.44/ 0.20 |
| Total | | 1401.61 grams |

In a 2-litre vessel, equipped with a reflux condenser, addition funnels, and a variable stirrer, the Initial Charge was added to the reactor, with an agitation at 260 rpm. The Initial Charge in the reactor was heated to 75°C. When the temperature of the Initial Charge reached 70°C, 50% of Catalyst Solution was added to the reactor. When the temperature reached 73°C, 8% of Monomer Mix was progressively added over one hour to the reactor to form a mixture. When the temperature of the mixture reached 75°C, the remaining Monomer Mix was added to the reactor over a period of two hours at a rate such that the temperature of the mixture in the reactor was maintained at 75°C with the assistance of an external heating source. At the end of the Monomer Mix, the remaining 50% of Catalyst Solution was added and the temperature was increased to 90°C. The temperature was maintained for 30 minutes.

Agitation was continued and the mixture was cooled and a solution of 2.0 grams of tertiary butyl hydro-peroxide in 25.0 grams of water and 1.4 grams of sodium formaldehyde sulphoxylate was added. The resulting emulsion polymer, Polymer II, was determined to have negligible coagulum, 50.8% solids, pH of 4.37 and a viscosity of 4320 cps. The test results for the cold soak test are summarized in Table I.

### EXAMPLE III

A vinyl acetate - butyl acrylate copolymer latex was prepared according to the formula and procedure as described in Example II except that the non-ionic surfactant, Rexol 25/10 was not added. The resulting emulsion polymer, Polymer III, was determined to have negligible coagulum, 50.3% solids, pH of 4.9 and a viscosity of 6460 cps. The test results for the cold soak test are summarized in Table I.

### EXAMPLE IV

A vinyl acetate - butyl acrylate copolymer latex was prepared according to the formula and procedure as described in Example II except that the non-ionic surfactant, Rexol 25/10 was not added, the PVOH blend was reduced to 2.80 pphm, and 1.75 pphm (0.70 pphm 100% active) of DISPONIL PC 14-17 EXP, a 40% aqueous solution of a high molecular weight water-dispersible nonionic polyurethane was added to the reactor. The resulting emulsion polymer, Polymer IV, was determined to be unfilterable due to precipitate. Thus, no characterization and testing was performed.

### EXAMPLE V

A vinyl acetate - butyl acrylate copolymer latex was prepared according to the formula and procedure as described in Example II except that the PVOH blend was reduced to 2.80 pphm, and 1.75 pphm (0.70 pphm 100% active) of DISPONIL PC 14-17 EXP, a 40% aqueous solution of a high molecular weight water-dispersible nonionic polyurethane was added to the reactor. The resulting emulsion polymer, Polymer V, was determined to have negative coagulum, 50.02% solids, pH of 4.1 and a viscosity of 1700 cps. The test results for the cold soak test are summarized in Table I.

### EXAMPLE VI

A vinyl acetate - butyl acrylate copolymer latex was prepared according to the formula and procedure as described in Example II except that only 88% hydrolyzed polyvinyl alcohol was used, and 1.75 pphm (0.70 pphm 100% active) of DISPONIL PC 14-17 EXP, a 40% aqueous solution of a high molecular weight water-dispersible nonionic polyurethane was added to the reactor. The resulting emulsion polymer, Polymer VI, was determined to have negative coagulum, 49.8% solids, pH of 4.44 and a viscosity of 4590 cps. The test results for the cold soak test are summarized in Table I.

### EXAMPLE VII

A vinyl acetate polymer latex was prepared according to the formula and procedure as described in Example II except that no butyl acrylate was used, the PVOH blend was decreased to 3.00 pphm and 1.75 pphm (0.70 pphm 100% active) of DISPONIL PC 14-17 EXP, a 40% aqueous solution of a high molecular weight water-dispersible nonionic polyurethane was added to the reactor. The resulting emulsion polymer, Polymer VII, was determined to have negative coagulum, 50.59% solids, pH of 4.15 and a viscosity of 4380 cps. The test results for the cold soak test are summarized in Table I.

### EXAMPLE VIII

A vinyl acetate - butyl acrylate copolymer latex was prepared according to the formula and procedure as described in Example II except that the PVOH blend was decreased to 3.00 pphm, and 2.28 pphm (0.91 pphm 100% active) of DISPONIL PC 14-17 EXP, a 40% aqueous solution of a high molecular weight water-dispersible nonionic polyurethane was added to the reactor. The resulting emulsion polymer, Polymer VIII, was determined to have negative coagulum, 50.4% solids, pH of 4.33 and a viscosity of 7480 cps. The test results for the cold soak test are summarized in Table I.

### EXAMPLE IX

A vinyl acetate - butyl acrylate copolymer latex was prepared according to the formula and procedure as described in Example II except that only 88% hydrolyzed polyvinyl alcohols were used, the PVOH blend was decreased to 3.10 pphm, the N-methylol acrylamide was removed and replaced with water, and 1.75 pphm (0.70 pphm 100% active) of DISPONIL PC 14-17 EXP, a 40% aqueous solution of a high molecular weight water-dispersible nonionic polyurethane was added to the reactor. The resulting emulsion polymer, Polymer IX, was determined to be unfilterable due to precipitate. Thus, no characterization and testing was performed.

### EXAMPLE X

Woodworking adhesives were formulated from emulsion Polymers I-IX. The woodworking adhesives were prepared by mixing 96% of the emulsion polymers with 4% of an aluminum chloride solution as a curing agent. A defoamer in an amount of 0.1% was also added. The ingredients were mixed to form a smooth dispersion.

The performance of each of the adhesives was evaluated using CSA 0112.8 cold soak test method. In this test, 3-ply plywood constructions using 1/16" thick yellow birch veneer as wood species were lamina ted after applying the adhesive between successive layers of the plywood by means of a wire wound rod at 8 wet mils thickness. The plywood constructions were pressed together using a cold press at 100 psi for two hours. After a 7-day cure at room temperature, the plywood constructions were submerged in water at 21 to 24°C for 48 hours. Without drying, the plywood constructions were evaluated according to CSA 0112.0-M1977 plywood shear test. The test results are summarized in Table I.

**TABLE I**

| | | | | | | | | Cold Soak Test | |
|---|---|---|---|---|---|---|---|---|---|
| Ex. # | Tri als | PVO H | Polyurethane | N-Methylol AcAm | VAM | B.A. | Rexol 25/10 | Shear Strength PSI | Wood Tear % |
| I | a | 3.1 | ---- | 3.0 | 100 | ---- | ---- | 298 | 0 |
| | b | 3.1 | --- | 3.0 | 100 | --- | --- | 251 | 0 |
| | c | 3.1 | --- | 3.0 | 100 | --- | --- | 295 | 0 |
| | d | 3.1 | --- | 3.0 | 100 | --- | --- | 285 | 0 |
| | e | 3.1 | --- | 3.0 | 100 | --- | --- | 240 | 0 |
| II | | 3.6 | --- | 3.0 | 95 | 5 | 0.5 | 376 | 4 |
| III | | 3.6 | --- | 3.0 | 95 | 5 | -- | 228 | 0 |
| IV | | 2.8 | 0.7 | 3.0 | 95 | 5 | -- | Not tested | |
| V | | 2.8 | 0.7 | 3.0 | 95 | 5 | 0.5 | 328 | 0 |
| VI | | 3.1 | 0.7 | 3.0 | 95 | 5 | 0.5 | 389 | 23 |
| VII | | 3.0 | 0.7 | 3.0 | 100 | --- | 0.5 | 232 | 0 |
| VIII | | 3.0 | 0.91 | 3.0 | 95 | 5 | 0.5 | 375 | 1 |
| IX | | 3.1 | 0.7 | --- | 95 | 5 | 0.5 | Not tested | |

The results in Table I show that the emulsion polymers which were prepared with vinyl acetate/N-methylol acrylamide copolymer in the presence of polyvinyl alcohol and a water-dispersible nonionic polyurethane achieved shear strength values of greater than 300 psi which was the maximum achieved by a vinyl acetate polymer or copolymer in the presence of polyvinyl alcohol without the polyurethane. It is clear that the polyvinyl alcohol alone did not produce the results that were achieved by a blend of polyvinyl alcohol and polyurethane. It is noted that the degree of variability between the plywood samples tested is due in part, to differences in the individual wood pieces being yellow birch veneer.

In addition, the presence of the water-dispersible nonionic polyurethane resulted in adhesives having improved "wood tear" as compared to adhesives prepared using the polymers without the polyurethane. For example, Example 6 which was a vinyl acetate/N-methylol acrylamide/butyl acrylate copolymer which was prepared with only 88% hydrolyzed polyvinyl alcohol and the water-soluble polyurethane displayed a superior wood tear percent after soaking in water for 48 hours. The wood tear percent for the adhesive prepared using Polymer VI far exceeded the wood tear percent for any of the other adhesives.

It is therefore unexpected that the polymers of the present invention pass CSA 0112.8-M1977 Type II cold soak test standards for non-structural glued wood products where the product is submerged in water at 21 to 24°C for 48 hours and without drying tested for failure.

While the invention has been described with particular reference to certain embodiments thereof, it will be understood that changes and modifications may be made by those of ordinary skill within the scope and spirit of the following claims.

## Claims

**1.** A water-resistant adhesive composition comprising an aqueous emulsion polymer which comprises reacting
(A) from about 80 to 99 weight percent, based on the total weight of monomer, of vinyl acetate; and
(B) from about 1 to about 10 weight percent, based on the total weight of monomer, of an N-methylol containing copolymerizable monomer, wherein the polymerization is conducted in the presence of
(C) at least 2 weight percent, based on the total weight of the aqueous emulsion, of polyvinyl alcohol wherein at least 85% of the polyvinyl alcohol is hydrolyzed; and
(D) from about 0.1 to about 8.0 parts per hundred monomer (pphm) in the emulsion of a water-dispersible nonionic polyurethane which is prepared by reacting (i) an organic polyisocyanate, (ii) water-soluble polyalkylene glycols containing at least 70 weight percent of ethylene glycol units and having an average molecular weight of from about 500 to about 100,000, and (iii) polyhydric branched alcohols containing at least three hydroxyl groups per molecule, wherein the equivalent ratio of (ii) to (iii) is in the range of 1:0.01 to 1:10.

**2.** A water-resistant adhesive composition comprising an aqueous emulsion polymer which comprises reacting
(A) from about 80 to 99 weight percent, based on the total weight of monomer, of vinyl acetate; (B) from about 1 to about 10 weight percent, based on the total weight of monomer, of an N-methylol containing copolymerizable monomer; and (B') from about 0.1 to about 10 weight percent, based on the total weight of monomer, of an ethylenically unsaturated monomer selected from the group consisting of vinyl esters, ethylene, alkyl esters of acrylic and methacrylic acid, substituted or unsubstituted mono and dialkyl esters of alpha, beta-unsaturated dicarboxylic acids, alpha, beta-unsaturated carboxylic acids, and combinations thereof, provided that the ethylenically unsaturated monomer is not methylmethacrylate, wherein the polymerization is conducted in the presence of
(C) at least 2 weight percent, based on the total weight of the aqueous emulsion, of polyvinyl alcohol wherein at least 85% of the polyvinyl alcohol is hydrolyzed; and
(D) from about 0.1 to about 8.0 parts per hundred monomer (pphm) in the emulsion of a water-dispersible nonionic polyurethane which is prepared by reacting (i) an organic polyisocyanate, (ii) water-soluble polyalkylene glycols containing at least 70 weight percent of ethylene glycol units and having an average molecular weight of from about 500 to about 100,000, and (iii) polyhydric branched alcohols containing at least three hydroxyl groups per molecule, wherein the equivalent ratio of (ii) to (iii) is in the range of 1:0.01 to 1:10.

**3.** The adhesive according to Claim 1 wherein the N-methylol containing copolymerizable monomer is selected from the group consisting of N-methylol acrylamide, N-ethanol acrylamide, N-propanol acrylamide, N-methylol methacrylamide, N-ethanol methacrylamide, N-propanol acrylamide, N-methylol maleamide, N-methylol maleamic acid, N-methylol-p-vinylbenzarnide, N-(methoxymethyl) acrylamide, N-(butoxymethyl) acrylamide, N-(methoxymethyl) methacrylamide, N-(butoxymethyl) allyl carbamate, N-(methoxymethyl) methacrylamide, N-(butoxymethyl) allyl carbamate, N-(methoxymethyl) allyl carbamate, and combinations thereof.

**3.** The adhesive according to Claim 1 wherein the polyhydric branched alcohol component of the water-dispersible nonionic polyurethane is selected from the group consisting of trimethylolpropane, glycerol, pentaerythritol, ditrimethylolpropane, dipentaerythritol, and alkoxylates thereof.

**4.** The adhesive according to Claim 1 wherein the equivalent ratio of (ii) to (iii) is in the range of 0.1 to 5.

**5.** The adhesive according to Claim 4 wherein the equivalent ratio of (ii) to (iii) is in the range of 0.1 to 3.

**6.** The adhesive according to Claim 1 wherein the equivalent ratio of the sum of the OH groups of the polyalkylene glycols and the branched polyhydric alcohols to the NCO groups of the polyisocyanates is in the range of 1:0.99 to 1:0.5.

**7.** A cellulosic material comprising a water-resistant adhesive wherein said adhesive is prepared from an aqueous emulsion polymer which comprises reacting
(A) from about 80 to 99 weight percent, based on the total weight of monomer, of vinyl acetate; and
(B) from about 1 to about 10 weight percent, based on the total weight of monomer, of an N-methylol containing copolymerizable monomer, wherein the polymerization is conducted in the presence of
(C) at least 2 weight percent, based on the total weight of the aqueous emulsion, of polyvinyl alcohol wherein at least 85% of the polyvinyl alcohol is hydrolyzed; and
(D) from about 0.1 to about 8.0 parts per hundred monomer (pphm) in the emulsion of a water-dispersible nonionic polyurethane which is prepared by reacting (i) an organic polyisocyanate, (ii) water-soluble polyalkylene glycols containing at least 70 weight percent of ethylene glycol units and having an average molecular weight of from about 500 to about 100,000, and (iii) polyhydric branched alcohols containing at least three hydroxyl groups per molecule, wherein the equivalent ratio of (ii) to (iii) is in the range of 1:0.01 to 1:10.

**8.** A method of making a water-resistant adhesive for placement between layers of cellulosic material, said method comprising
(I) mixing an acidic metal salt curing agent with an aqueous emulsion polymer which comprises the reaction product of
(A) from about 80 to 99 weight percent, based on the total weight of monomer, of vinyl acetate; and
(B) from about 1 to about 10 weight percent, based on the total weight of monomer, of an N-methylol containing copolymerizable monomer, wherein the polymerization is conducted in the presence of
(C) at least 2 weight percent, based on the total weight of the aqueous emulsion, of polyvinyl alcohol wherein at least 85% of the polyvinyl alcohol is hydrolyzed; and
(D) from about 0.1 to about 8.0 parts per hundred monomer (pphm) in the emulsion of a water-dispersible nonionic polyurethane which is prepared by reacting (i) an organic polyisocyanate, (ii) water-soluble polyalkylene glycols containing at least 70 weight percent of ethylene glycol units and having an average molecular weight of from about 500 to about 100,000, and (iii) polyhydric branched alcohols containing at least three hydroxyl groups per molecule, wherein the equivalent ratio of (ii) to (iii) is in the range of 1:0.01 to 1:10, to form an adhesive;
(II) applying the adhesive formed in Step (I) to a cellulosic material; and
(III) allowing the adhesive to air cure or using radio frequency to cure the adhesive.
